# EUROPÄISCHE PATENTANMELDUNG

(11) **EP 4 265 365 A1**
(43) Veröffentlichungstag der Anmeldung: **25.10.2023**
(21) Anmeldenummer: 22169347.6
(22) Anmeldetag: 21.04.2022
(51) Int. Cl.: B23K 26/082, B23K 26/08, B23K 26/36

(54) **VERFAHREN ZUR LASERBASIERTEN BEARBEITUNG EINES WERKSTÜCKS UND LASERBEARBEITUNGSVORRICHTUNG ZUR DURCHFÜHRUNG DES VERFAHRENS**

(71) Anmelder: Rollomatic S.A., 2525 Le Landeron (CH)
(72) Erfinder: KRUMM, Christian, 2607 Cortébert (CH); FREIDY, Mohamadali, 1020 Renens (CH); DA SILVA RIBEIRO, Fernando Manuel, 2517 Diesse (CH)
(74) Vertreter: Geitz Patentanwälte PartG mbB

(57) **Zusammenfassung**

Es wird ein Verfahren zur laserbasierten Bearbeitung eines Werkstücks (4, 24, 34, 54) vorgeschlagen, wobei an dem Werkstück (4, 24, 34, 54) durch Materialabtrag mittels eines Laserstrahls (2, 32, 52) eine vorgegebene äußere Form mit einer Kontur (1) erzeugt wird unter Verwendung einer Laserbearbeitungsvorrichtung (50), welche eine das Werkstück (4, 24, 34, 54) aufnehmende und fixierende Werkstück-Fixiereinrichtung (51), eine Bewegungseinrichtung( 53), welche die Werkstück-Fixiereinrichtung relativ zu einer Vorrichtungsbasis (55) bewegt, und einen Laser (56) umfasst, welcher einen entlang einer Strahlachse gerichteten Laserstrahl (2, 32, 52) erzeugt und welcher eine den Laserstrahl (2, 32, 52) gezielt ablenkende Laserscanning-Einrichtung (57) aufweist. Dabei werden zeitgleich eine Bewegung des Werkstücks (4, 24, 34, 54), eine Führung des Laserstrahls (2, 32, 52) und eine Vorschubbewegung von Werkstück (4, 24, 34, 54) und/ oder Laserstrahl (2, 32, 52) ausgeführt.

## Beschreibung

Die Erfindung geht aus von einem Verfahren zur laserbasierten Bearbeitung eines Werkstücks.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. Die Oberfläche des Werkstücks erreicht dabei lokal eine so hohe Temperatur, dass das Material des Werkstücks verdampft oder sublimiert. Bei hoher Leistungsdichte des Lasers entsteht ein Plasma aus Elektronen und Ionen des abgetragenen Materials. Der Materialabtrag wird auch als Laserablation oder Laserverdampfen bezeichnet. Das Material kann dabei beispielsweise flächig in Schichten abgetragen werden. Ferner besteht die Möglichkeit, ein Werkstück mittels kontinuierlicher oder gepulster Laserstrahlung zu durchtrennen. Dies wird als Laserschneiden oder Laserstrahlschneiden bezeichnet. Die Parameter der Laserstrahlung müssen an das zu bearbeitende Material und die gewünschte Bearbeitung angepasst werden. Zu den Parametern der Laserstrahlung zählen die Wellenlänge und die mittlere Leistung. Ist die Laserstrahlung gepulst, gehören zu den Parametern ferner die Pulsenergie und Pulsdauer.

Laserstrahl und Werkstück werden für die Laserbearbeitung definiert relativ zueinander ausgerichtet und gegebenenfalls bewegt, um Material innerhalb vorgegebener Bereiche des Werkstücks gezielt abzutragen und bestimmte Konturen an der Oberfläche des Werkstücks auszubilden. Hierzu gehört unter anderem das Erzeugen von Schneiden oder sonstigen Kanten an Werkstücken.

Eine Laserbearbeitungsvorrichtung ist mit einem Laser ausgestattet, welcher einen Laserstrahl erzeugt. Der Laserstrahl erstreckt sich entlang einer Strahlachse. Dabei entspricht die Strahlachse einer geometrischen Geraden. Der Laser umfasst einen Laserkopf, der den Laserstrahl mit seiner Strahlachse gezielt auf ein Werkstück richtet und diesen gegebenenfalls innerhalb einer vorgegebenen Kontur über die Oberfläche eines Werkstücks bewegt. Das Werkstück wird in einer Vorrichtung zur Ausrichtung und Positionierung angeordnet, welche bei einer Werkzeugmaschine auch als Aufspanneinrichtung bezeichnet wird. Diese Vorrichtung ist mit einer Vorrichtungsbasis, einer Werkstück-Fixiereinrichtung und einer Bewegungseinrichtung ausgestattet. Die Vorrichtungsbasis ist ortsfest angeordnet. Sie kann Teil der Maschinenbasis der Laserbearbeitungsvorrichtung sein. Die Werkstück-Fixiereinrichtung nimmt das Werkstück auf und spannt es fest ein, so dass sich die Position des Werkstücks relativ zur Werkstück-Fixiereinrichtung während der Bearbeitung des Werkstücks nicht verändert. Die Bewegungseinrichtung sorgt für eine Bewegung der Werkstück-Fixiereinrichtung relativ zur Vorrichtungsbasis. Da der Laserkopf der Laserbearbeitungsvorrichtung in Relation zu der Vorrichtungsbasis in der Regel ortsfest angeordnet ist, sorgt die Bewegungseinrichtung damit auch für eine Relativbewegung zwischen dem Laserkopf einerseits und der Werkstück-Fixiereinrichtung andererseits. Entsprechend wird dadurch ein an der Werkstück-Fixiereinrichtung eingespanntes Werkstück relativ zu einem von dem Laserkopf erzeugten Laserstrahl bewegt. Dank der durch die Bewegungseinrichtung ausgelösten Relativbewegung kann damit eine Bearbeitung eines Werkstücks an seiner gesamten Oberfläche erfolgen, soweit die Werkstückoberfläche nicht durch die Werkstück-Fixiereinrichtung abgedeckt ist. Bei der Bearbeitung wird das Werkstück mit seiner Oberfläche unter verschiedenen Winkeln gegen den Laserstrahl ausgerichtet. Der Laserkopf kann mit einer Ablenkeinrichtung ausgestattet sein, die den Laserstrahl mittels optischer Komponenten gezielt ablenkt und dabei mit hoher Geschwindigkeit über eine Oberfläche des Werkstücks führt. Diese Ablenkeinrichtung wird als Laserscanning-Einrichtung bezeichnet. Sie sorgt für eine zusätzliche Relativbewegung von Laserstrahl und Werkstück.

Zur Bearbeitung eines Werkstücks wird der Laserstrahl üblicherweise mit seiner Strahlachse derart zu einem zu bearbeitenden Werkstück ausgerichtet, dass die Strahlachse senkrecht zu einer Oberfläche des Werkstücks ausgerichtet ist. Anschließend wird schichtweise Material an der Oberfläche eines Werkstücks abgetragen, bis das Werkstück eine gewünschte Form aufweist. Ein derartiges Verfahren eignet sich nur zur Bearbeitung kleiner Bereiche eines Werkstücks, da der schichtweise Materialabtrag sehr zeitaufwendig ist. Zur Bearbeitung eines Werkstücks entlang seiner gesamten Mantelfläche, insbesondere zur Erzeugung einer sich über den Umfang erstreckenden äußeren Kontur eines Werkstücks, ist ein derartiges Verfahren mit schichtweisem Materialabtrag aus Zeit- und Kostengründen ungeeignet. Dies gilt beispielsweise, wenn aus einem zylindrischen Rohling ein Bohrer oder eine Reibahle hergestellt werden soll.

Der Erfindung liegt die Aufgabe zugrunde, ein Verfahren und eine Vorrichtung zur laserbasierten Bearbeitung eines Werkstücks zur Verfügung zu stellen, mit denen aus einem Rohling ein Werkstück mit einer vorgegebenen äußeren Kontur mit hoher Genauigkeit hergestellt werden kann, wobei das Werkstück während der gesamten Bearbeitung in einer Werkstück-Fixiereinrichtung eingespannt bleibt und ein Umspannen des Werkstücks entfällt.

Diese Aufgabe wird durch ein Verfahren mit den Merkmalen des Anspruchs 1 und durch eine Laserbearbeitungsvorrichtung mit den Merkmalen des Anspruchs 19 gelöst. Das Verfahren gemäß Anspruch 1 zeichnet sich dadurch aus, dass das Werkstück in einer Werkstück-Fixiereinrichtung einer Laserbearbeitungseinrichtung angeordnet wird und dass zeitgleich drei einander überlagerte Bewegungen ausgeführt werden, welche zu einem gezielten Materialabtrag an dem Werkstück führen:
Eine erste Bewegung ist eine Werkstück-Rotationsbewegung, bei der die Werkstück-Fixiereinrichtung um eine geometrische Werkstück-Rotationsachse rotiert. Dabei wird das in der Werkstück-Fixiereinrichtung angeordnete Werkstück um die sich durch das Werkstück erstreckende Werkstück-Rotationsachse endlos gedreht. Das Werkstück vollführt dabei eine fortlaufende Abfolge vollständiger Umdrehungen. Da sich die geometrische Werkstück-Rotationsachse durch das Werkstück erstreckt, handelt es sich um eine werkstückgebundene Drehachse.

Eine zweite Bewegung ist eine gezielte Führung des Laserstrahls. Dabei wird der Laserstrahl mittels der Laserscanning-Einrichtung entlang eines vorgegebenen Laserpfads bewegt. Der vorgegebene Laserpfad erstreckt sich von einem ersten Punkt A bis zum einem zweiten Punkt B. Der Laserpfad ist dabei durch den Verlauf der zu erzeugenden Kontur des Werkstücks vorgegeben.

Eine dritte Bewegung ist eine Vorschubbewegung, bei der die Werkstück-Fixiereinrichtung und/ oder der Laserstrahl vorgeschoben werden, derart, dass die Oberfläche des in der Werkstück-Fixiereinrichtung angeordneten Werkstücks mit dem Laserstrahl in Kontakt tritt, wobei mit dem Laserstrahl Material an der Oberfläche des Werkstücks abgetragen und die äußere Kontur des Werkstücks erzeugt wird.

Dabei sind die drei Bewegungen zeitlich überlagert. Die die erste Bewegung, die zweite Bewegung und die dritte Bewegung werden gleichzeitig und parallel zueinander ausgeführt, bis die vorgegebene Kontur an dem Werkstück erzeugt ist.

Das Material wird dabei nicht schichtweise abgetragen, sondern es werden ganze Bereiche entlang des Umfangs des Werkstücks entfernt. Die erste Bewegung ist eine Abfolge von vollständigen Umdrehungen des Werkstücks um die Werkstück-Rotationsachse. Die zweite Bewegung kann beliebig oft wiederholt werden. Hierzu wird der Laserstrahl entlang des Laserpfads zwischen dem ersten Punkt A und dem zweiten Punkt B mehrfach hin- und herbewegt. Die dritte Bewegung sorgt dafür, dass das rotierte Werkstück und der entlang des Laserpfads geführte Laserstrahl derart in Berührung kommen, dass an der Außenseite des Werkstücks gezielt durch den Laserstrahl Material abgetragen wird.

Die Kontur des Werkstücks wird durch die zu erzeugende äußere Form des Werkstücks vorgegeben. Sie entspricht einer Kurve, die das mit der zu erzeugenden Form ausgestattete Werkstück von seiner Umgebung in dem mit dem Verfahren zu bearbeitenden Bereich abgrenzt.

In einer bevorzugten Ausgestaltung des erfindungsgemäßen Verfahrens wird der Laserstrahl während der zweiten Bewegung derart zum Werkstück ausgerichtet, dass seine Strahlachse senkrecht auf einer geometrischen Ebene steht, in der die Werkstück-Rotationsachse verläuft. Der Laserpfad entspricht der Schnittmenge zwischen dieser geometrischen Ebene und dem Werkstück, welches die zu erzeugende äußere Form aufweist. Die Schnittmenge erstreckt sich zu beiden Seiten der Werkstück-Rotationsachse. Bei rotationssymmetrischen Formen des Werkstücks ist die Schnittmenge achsensymmetrisch zur Werkstück-Rotationsachse. Der Laserpfad kann nur auf einer Seite der Werkstück-Rotationsachse oder auf beiden Seiten der Werkstück-Rotationsachse verlaufen. Der Laserstrahl ist in diesem Fall bei der Bearbeitung tangential zu der zu erzeugenden Werkstückoberfläche ausgerichtet.

In einer weiteren bevorzugten Ausgestaltung des erfindungsgemäßen Verfahrens wird der Laserstrahl derart zum Werkstück ausgerichtet, dass die Strahlachse mit einer Tangente an die zu erzeugende äußere Form des Werkstücks einen Winkel zwischen 1° und 10° einschließt.

In einer weiteren bevorzugten Ausgestaltung des erfindungsgemäßen Verfahrens ist der Laserstrahl während der zweiten Bewegung radial zur Werkstück-Rotationsachse ausgerichtet.

Die erste, zweite und dritte Bewegung werden derart aufeinander abgestimmt, dass jede beliebige äußere Form des Werkstücks erzeugt werden kann. Hierzu zählen rotationssymmetrische Formen und nicht-rotationssymmetrische Formen, beispielsweise äußere Formen, die ebene Oberflächen aufweisen.

Mit dem erfindungsgemäßen Verfahren kann eine äußere Form des Werkstücks erzeugt werden, die sich über den gesamten äußeren Umfang des Werkstücks erstreckt und die eine Ausdehnung in axialer Richtung bezogen auf die Werkstück-Rotationsachse aufweist. Während dieser Bearbeitung bleibt das Werkstück in der Werkstück-Fixiereinrichtung eingespannt. Die Bearbeitung ist schnell und präzise.

Ein wesentlicher Vorteil des erfindungsgemäßen Verfahrens besteht darin, dass sich bei einem fokussierten Laserstrahl der Fokus während der Laserbearbeitung stets an der zu bearbeitenden Position oder sehr nahe dieser Position befindet. Dies ermöglicht eine optimale Bearbeitung des Werkstücks.

Nach einer vorteilhaften Ausgestaltung der Erfindung wird der Laserstrahl bei der zweiten Bewegung mehrfach an dem Laserpfad von A nach B entlanggeführt.

Nach einer weiteren vorteilhaften Ausgestaltung der Erfindung wird der Laserstrahl entlang des Laserpfads von A nach B und anschließend von B nach A geführt. Diese Bewegung kann beliebig oft wiederholt werden, bis die vorgegebene Form an dem Werkstück erzeugt ist.

Nach einer weiteren vorteilhaften Ausgestaltung der Erfindung wird der Laserstrahl entlang des Laserpfads mehrfach von A nach B bewegt, wobei die Bewegung des aktiven Laserstrahls ausschließlich in die Richtung von A nach B erfolgt und nicht umgekehrt. Um den Laserstrahl nach Erreichen des Punktes B wieder an den Punkt A zurückzuführen, wird der Laserstrahl entweder bei der Rückführung ausgeschaltet oder die Rückführung erfolgt bei aktiviertem Laserstrahl entlang einer Kurve, welche von dem durch die zu erzeugende Kontur des Werkstücks vorgegebenen Laserpfad A - B abweicht, wobei diese Kurve sich außerhalb des zu bearbeitenden Werkstücks erstreckt, um eine unerwünschte Wechselwirkung zwischen dem Laserstrahl und dem Werkstück zu vermeiden.

Nach einer weiteren vorteilhaften Ausgestaltung der Erfindung wird der Laserstrahl bei der zweiten Bewegung entlang des Laserpfads von A nach B im wesentlichen senkrecht zur Strahlachse des Laserstrahls bewegt. Die Bewegungsrichtung des Laserstrahls bei der zweiten Bewegung ist damit im wesentlichen senkrecht zur Strahlachse des Laserstrahls.

Nach einer weiteren vorteilhaften Ausgestaltung der Erfindung umfasst die Schnittmenge zwischen einer geometrischen Werkstückebene, in der die Werkstück-Rotationsachse verläuft, und der zu erzeugenden äußeren Form des Werkstücks den Laserpfad von A nach B.

Nach einer weiteren vorteilhaften Ausgestaltung der Erfindung stellen der erste Punkt A und der zweite Punkt B in axialer Richtung bezogen auf die Werkstück-Rotationsachse die Grenzen der zu erzeugenden äußeren Form des Werkstücks dar. Die Laserbearbeitung erstreckt sich damit in axialer Richtung zwischen den Grenzen der Punkte A und B.

Nach einer weiteren vorteilhaften Ausgestaltung der Erfindung entspricht der Laserpfad dem Verlauf der zu erzeugenden Kontur. Dabei kann der Durchmesser des Laserstrahls als Versatz zwischen dem Laserpfad und dem Verlauf der Kontur berücksichtigt werden.

Nach einer weiteren vorteilhaften Ausgestaltung der Erfindung führt der Laserstrahl zusätzlich eine vierte Bewegung aus, bei der der Laserstrahl in offenen oder geschlossenen Kurven um ein Zentrum bewegt wird. Dabei ist die vierte Bewegung der zweiten Bewegung überlagert. Das Zentrum der vierten Bewegung befindet sich auf der Kurve, die durch den Verlauf der zu erzeugenden Kontur vorgegeben ist. Dabei kann der Durchmesser des Laserstrahls als Versatz berücksichtigt werden. Der Laserstrahl wird damit gemäß der zweiten Bewegung entlang der zu erzeugenden Kontur von dem ersten Punkt A zu dem zweiten Punkt B bewegt und gleichzeitig gemäß der vierten Bewegung entlang von kleinen geschlossenen oder offenen Kurven geführt. Der Laserstrahl wird dabei nicht nur entlang einer geradlinigen, gekrümmten oder unregelmäßig geformten Linie entlang geführt, die der zu erzeugenden Kontur entspricht, sondern vollführt mit der vierten Bewegung um die zu erzeugende Kontur herum eine schleifenförmige Bewegung. Dadurch kann der Bereich, in dem beim Auftreffen des Laserstrahls auf das Werkstück ein Materialabtrag an dem Werkstück erfolgt, vergrößert werden. Dabei ist die Ausdehnung der offenen oder geschlossenen Kurven klein gegenüber der zu erzeugenden Kontur. Bei den geschlossenen Kurven kann es sich beispielsweise um Kreise, Ellipsen oder um die Form der Zahl acht handeln. Offene Kurven zeichnen sich dadurch aus, dass der Anfangs- und Endpunkt der Kurve nicht zusammenfallen.

Nach einer weiteren vorteilhaften Ausgestaltung der Erfindung beträgt das Verhältnis zwischen dem Durchmesser der offenen oder geschlossenen Kurve und dem Durchmesser des Laserstrahls beim Auftreffen auf das Werkstück zwischen 1,2 und 150. Dadurch ist gewährleistet, dass die Ausdehnung der offenen oder geschlossenen Kurven klein ist gegenüber der zu erzeugenden Kontur. Die Kurve weist in bevorzugter Weise einen Durchmesser zwischen 0,05 mm und 2,0 mm auf. Der Durchmesser des Laserstrahls beim Auftreffen auf das Werkstück beträgt bevorzugt zwischen 0,008 mm und 0,03 mm, besonders bevorzugt zwischen 0,015 mm und 0,03 mm.

Nach einer weiteren vorteilhaften Ausgestaltung der Erfindung wird bei der dritten Bewegung die Werkstück-Fixiereinrichtung in einer Richtung senkrecht zur Strahlachse des Laserstrahls bewegt.

Nach einer weiteren vorteilhaften Ausgestaltung der Erfindung wird bei der dritten Bewegung der Laserstrahl in Richtung des Werkstücks bewegt.

Nach einer weiteren vorteilhaften Ausgestaltung der Erfindung umfasst die dritte Bewegung eine lineare Bewegung in radialer Richtung bezogen auf die Werkstück-Rotationsachse.

Nach einer weiteren vorteilhaften Ausgestaltung der Erfindung umfasst die dritte Bewegung eine lineare Bewegung in axialer Richtung oder parallel zur axialen Richtung bezogen auf die Werkstück-Rotationsachse. Die dritte Bewegung kann eine Überlagerung einer radialen und einer axialen Bewegung bezogen auf die Werkstück-Rotationsachse umfassen.

Nach einer weiteren vorteilhaften Ausgestaltung der Erfindung ist der Laserstrahl mit seiner Strahlachse beim Abtragen von Material an der Oberfläche des Werkstücks radial zur Werkstück-Rotationsachse ausgerichtet. Die Vorschubbewegung der dritten Bewegung führt dazu, dass sich der Fokus des Laserstrahls entweder an der Oberfläche des Werkstücks, auf der zu erzeugenden Kontur oder nahe bei einem dieser Punkte befindet.

Nach einer weiteren vorteilhaften Ausgestaltung der Erfindung ist der Laserstrahl mit seiner Strahlachse beim Abtragen von Material an der Oberfläche des Werkstücks tangential zur Oberfläche des Werkstücks ausgerichtet.

Nach einer weiteren vorteilhaften Ausgestaltung der Erfindung ist der Laserstrahl mit seiner Strahlachse gegenüber einer Tangente an die Oberfläche der zu erzeugenden Form des Werkstücks um einen Winkel α in axialer Richtung geneigt, wobei der Winkel α zwischen 1° und 10° beträgt. Dabei kann die Neigung um den Winkel α gegenüber der Tangente in jede beliebige Richtung erfolgen. Die Tangente an die Oberfläche spannt zusammen mit der Strahlachse eine Ebene auf. Diese Ebene kann beispielsweise senkrecht zu der geometrischen Werkstück-Rotationsachse oder parallel zu der geometrischen Werkstück-Rotationsachse sein. Darüber hinaus kann die Ebene jede beliebige andere Ausrichtung relativ zu der geometrischen Werkstück-Rotationsachse aufweisen.

Nach einer weiteren vorteilhaften Ausgestaltung der Erfindung ist die dritte Bewegung in Abhängigkeit von der zweiten Bewegung gesteuert.

Nach einer weiteren vorteilhaften Ausgestaltung der Erfindung ist die dritte Bewegung in Abhängigkeit von der ersten Bewegung gesteuert.

Nach einer weiteren vorteilhaften Ausgestaltung der Erfindung wird das in der Werkstück-Fixiereinrichtung angeordnete Werkstück mit einer Drehgeschwindigkeit zwischen 5 und 1.000 U/min rotiert. Dabei kann die Drehgeschwindigkeit während der gesamten Bearbeitung konstant bleiben oder in Abhängigkeit vom Werkstück und/ oder der zu erzeugenden Form variieren. Für ein rotationssymmetrisches Werkstück kann beispielsweise eine konstante Drehgeschwindigkeit zwischen 50 und 300 U/min eingestellt werden. Dies ist jedoch nicht obligatorisch. Die Drehzahl kann auch je nach Durchmesser der Werkstücke angepasst werden. Bei einem rotationssymmetrischen Durchmesser des Werkstücks kann zum Beispiel die Rotationsgeschwindigkeit zu Beginn geringer sein, solange der Laserstrahl noch nicht die Oberfläche des Werkstücks berührt. Sobald der Laserstrahl sich der Oberfläche des Werkstücks nähert, kann die Rotationsgeschwindigkeit erhöht werden. Dies wirkt sich auf die Menge des von der Oberfläche des Werkstücks abgetragenen Materials aus. So kann beispielsweise durch eine Änderung und Anpassung der Drehgeschwindigkeit erreicht werden, dass in vorgegebenen Zeitintervallen gleiche Mengen an Material abgetragen werden, obwohl sich der Durchmesser des Werkstücks durch den Materialabtrag ändert.

Nach einer weiteren vorteilhaften Ausgestaltung der Erfindung wird bei der zweiten Bewegung, welche eine Führung des Laserstrahls darstellt, der Laserstrahl mit einer Geschwindigkeit zwischen 0,05 m/s und 10 m/s bewegt.

Nach einer weiteren vorteilhaften Ausgestaltung der Erfindung findet die dritte Bewegung, bei der die Werkstück-Fixiereinrichtung und/ oder der Laserstrahl aufeinander zu bewegt werden, mit einer Geschwindigkeit zwischen 0,05 mm/min und 500 mm/min statt.

Nach einer weiteren vorteilhaften Ausgestaltung der Erfindung wird die Drehrichtung, mit der die Werkstück-Fixiereinrichtung rotiert, während der Laserbearbeitung des Werkstücks geändert.

Die Laserbearbeitungsvorrichtung zur Durchführung des erfindungsgemäßen Verfahrens zeichnet dadurch aus, dass sie eine das Werkstück aufnehmende und fixierende Werkstück-Fixiereinrichtung, eine Bewegungseinrichtung, welche die Werkstück-Fixiereinrichtung relativ zu einer Vorrichtungsbasis bewegt, und einen Laser umfasst, welcher einen entlang einer Strahlachse gerichteten Laserstrahl erzeugt und welcher eine den Laserstrahl gezielt ablenkende Laserscanning-Einrichtung aufweist. Dabei ist die Bewegungseinrichtung ausgebildet, eine Werkstück-Rotationsbewegung eines in der Werkstück-Fixiereinrichtung angeordneten Werkstücks auszuführen. Diese Bewegung wird als erste Bewegung bezeichnet. Die Laserscanning-Einrichtung ist ausgebildet, den Laserstrahl zu führen und dabei den Laserstrahl entlang eines vorgegebenen Laserpfads zu bewegen, wobei sich der Laserpfad von einem ersten Punkt A bis zum einem zweiten Punkt B erstreckt und der Laserpfad durch den Verlauf der zu erzeugenden Kontur vorgegeben ist. Diese Bewegung wird als zweite Bewegung bezeichnet. Die Bewegungseinrichtung und/ oder der Laser führen eine Vorschubbewegung aus, derart, dass die Oberfläche des in der Werkstück-Fixiereinrichtung angeordneten Werkstücks mit dem Laserstrahl in Kontakt tritt, wobei mit dem Laserstrahl Material an der Oberfläche des Werkstücks abgetragen und die vorgegebene äußere Kontur erzeugt wird. Diese Vorschubbewegung wird als dritte Bewegung bezeichnet. Dabei ist die Laserbearbeitungseinrichtung derart ausgebildet, dass die erste Bewegung, die zweite Bewegung und die dritte Bewegung zeitgleich und aufeinander abgestimmt ausgeführt werden.

Nach einer weiteren vorteilhaften Ausgestaltung der Erfindung ist die Laserbearbeitungsvorrichtung mit einer Steuerungseinrichtung ausgestattet, welche die erste Bewegung, die zweite Bewegung und die dritte Bewegung steuert. Dadurch ist gewährleistet, dass die drei Bewegung aufeinander abgestimmt sind. Führt der Laserstrahl eine zusätzliche vierte Bewegung aus, so steuert die Steuerungseinrichtung vorteilhafterweise auch diese vierte Bewegung.

Weitere Vorteile und vorteilhafte Ausgestaltungen der Erfindung können der nachfolgenden Beschreibung, der Zeichnung und den Ansprüchen entnommen werden.

### Zeichnung

In der Zeichnung sind Ausführungsbeispiele der erfindungsgemäßen laserbasierten Bearbeitung eines Werkstücks dargestellt. Es zeigen:
- Figur 1: erstes Ausführungsbeispiel einer laserbasierten Bearbeitung eines Werkstücks,
- Figur 2: Werkstück gemäß Figur 1 zu Beginn der Bearbeitung,
- Figur 3: Werkstück gemäß Figur 1 zu verschiedenen Zeitpunkten der Bearbeitung,
- Figur 4: Darstellung der Ausrichtung Laserstrahls bei der Bearbeitung gemäß Figuren 1 bis 3 und Darstellung der Bewegungsrichtung der dritten Bewegung,
- Figur 5: Darstellung einer alternativen Ausrichtung des Laserstrahls bei der Bearbeitung gemäß Figuren 1 bis 3 und Darstellung der Bewegungsrichtung der dritten Bewegung,
- Figur 6: Darstellung der Ausrichtung Laserstrahls bei der Bearbeitung gemäß Figuren 4 und Darstellung einer alternativen Bewegungsrichtung der dritten Bewegung,
- Figur 7: Darstellung der zweiten und vierten Bewegung bezogen auf den Laserstrahl,
- Fig. 8: Darstellung der zweiten und einer alternativen vierten Bewegung bezogen auf den Laserstrahl,
- Figur 9a: Werkstück in einer perspektivischen Ansicht in einem relativ frühen Zustand der Laserbearbeitung,
- Figur 9b: Werkstück in dem zustand gemäß Figur 9a in einer Ansicht von vorne,
- Figur 10a: Werkstück in einer perspektivischen Ansicht am Ende der Laserbearbeitung,
- Figur 10b: Werkstück in dem Zustand gemäß Figur 10a in einer Ansicht von vorne,
- Figur 11: Werkstück in perspektivischer Ansicht und in einer Ansicht von vorne zu verschiedenen Zeitpunkten der Laserbearbeitung,
- Figur 12: Werkstück und Laserstrahl, wobei sich der Laserstrahl an unterschiedlichen Positionen entlang des Laserpfads befindet,
- Figur 13: zweites Ausführungsbeispiel einer laserbasierten Bearbeitung eines Werkstücks,
- Figur 14: drittes Ausführungsbeispiel einer laserbasierten Bearbeitung eines Werkstücks,
- Figur 15: Werkstück gemäß Figur 14 vor Beginn der Laserbearbeitung,
- Figur 16: Werkstück gemäß Figur 14 zu Beginn der Laserbearbeitung,
- Figur 17: Werkstück gemäß Figur 14 während der Laserbearbeitung,
- Figur 18: Werkstück gemäß Figur 14 nach Abschluss der Laserbearbeitung,
- Figur 19: Laserbearbeitungsvorrichtung in perspektivischer Ansicht.

### Beschreibung der Ausführungsbeispiele

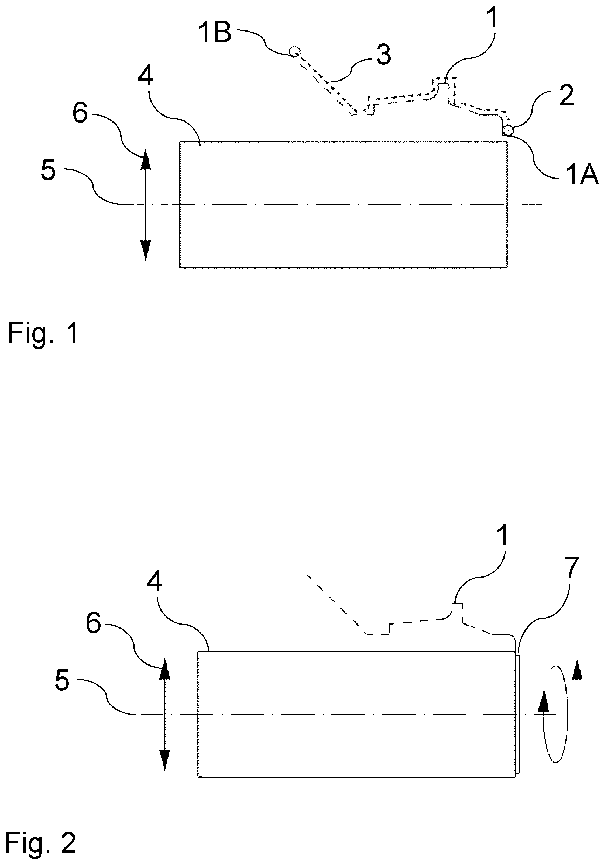

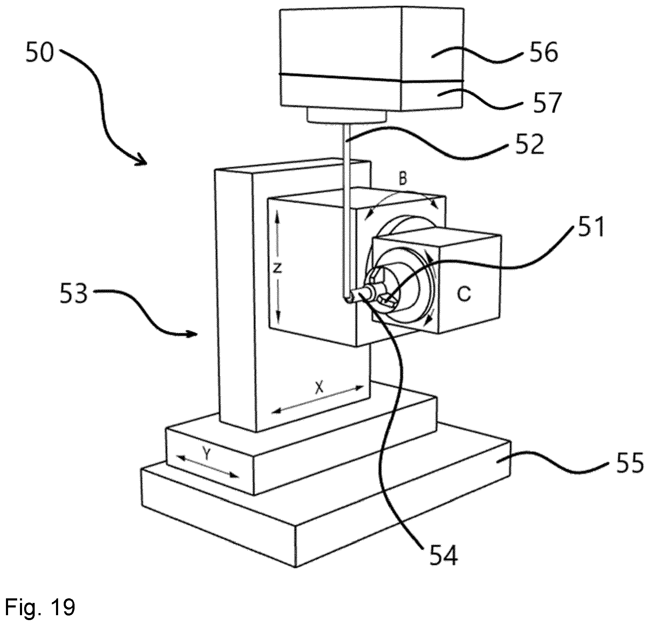

In den Figuren 1 bis 12 ist ein erstes Verfahren zur laserbasierten Bearbeitung eines Werkstücks 4 mittels eines Laserstrahls 2 dargestellt. Das Werkstück 4 liegt zunächst als Rohling vor. Der Rohling hat die Form eines Kreiszylinders. Das Werkstück 4 ist in einer Werkstück-Fixiereinrichtung einer Laserbearbeitungsvorrichtung eingespannt. Die Laserbearbeitungsvorrichtung 50 mit einer Werkstück-Fixiereinrichtung 51, einer Bewegungseinrichtung 53 und einem Laser 56 ist in Figur 19 dargestellt. Die Bewegungseinrichtung sorgt für eine Bewegung des Werkstück-Fixiereinrichtung relativ zu einer Vorrichtungsbasis- Hierzu zählt unter anderem eine Rotation der Werkstück-Fixiereinrichtung zusammen mit dem in der Werkstück-Fixiereinrichtung aufgenommenen Werkstück 4 um eine geometrische Werkstück-Rotationsachse 5. Die Werkstück-Rotationsachse 5 erstreckt sich dabei durch das Werkstück 4.

Es handelt sich daher um eine Werkstück-gebundene Drehachse. Im vorliegenden Fall hat das Werkstück 4 vor der Laserbearbeitung die Form eines Kreiszylinders. Die geometrische Werkstück-Rotationsachse 5 fällt mit der Längsachse des Werkstücks 4 zusammen. Bei der Rotation um die Werkstück-Rotationsachse 5 führt das Werkstück 4 eine fortlaufende Abfolge vollständiger Umdrehungen aus. Diese Bewegung wird als erste Bewegung bezeichnet. Sie ist in den Figuren 2 bis 6 durch einen kreisförmigen Pfeil rechts neben dem Werkstück 4 dargestellt.

Mit der Laserbearbeitung soll an dem Werkstück eine äußere Form mit der Kontur 1 erzeugt werden. Bei dem Ausführungsbeispiel gemäß Figuren 1 bis 12 ist die zu erzeugende Form rotationssymmetrisch bezogen auf die Werkstück-Rotationsachse 5.

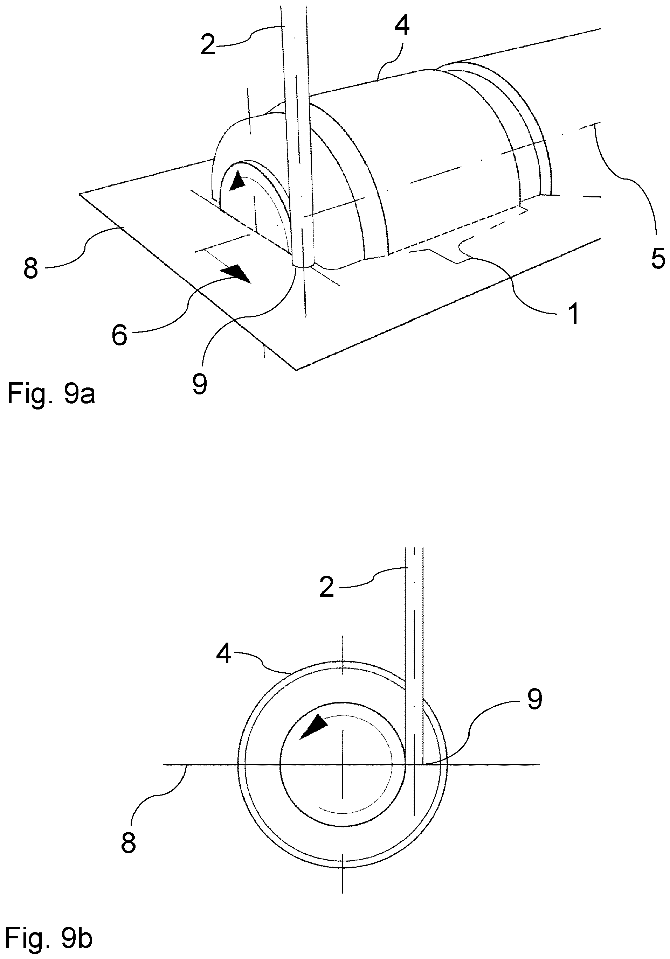

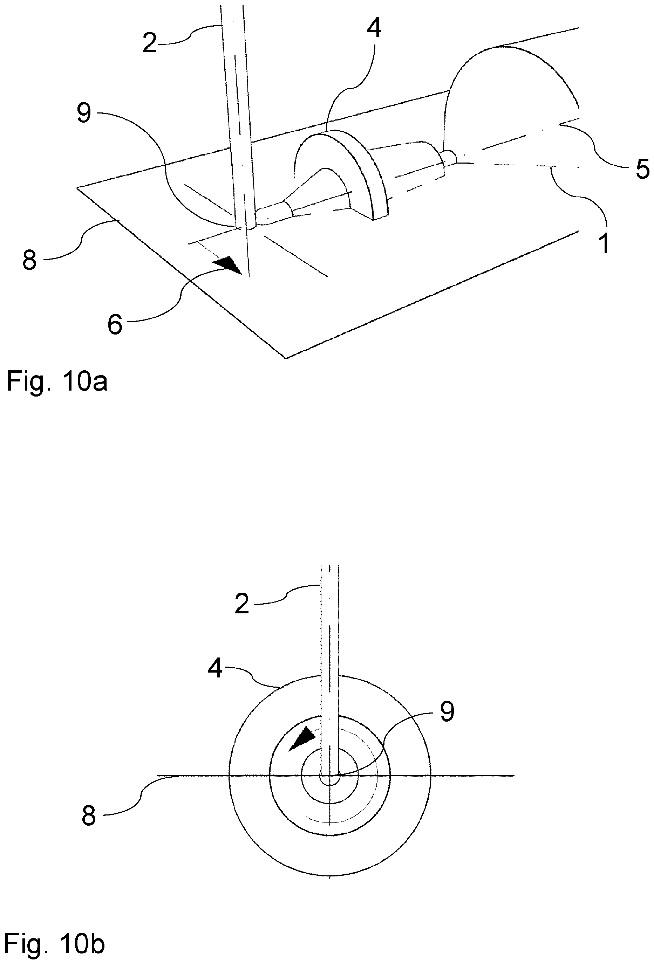

Der Laserstrahl 2 wird durch den in Figur 19 dargestellten Laser 56 erzeugt und mittels einer in der Zeichnung nicht erkennbaren Laserscanning-Einrichtung entlang der Kontur 1 geführt. Diese Bewegung des Laserstrahls wird als zweite Bewegung bezeichnet. Der Laserpfad 3 ist durch die Kontur 1 vorgegeben. Er erstreckt sich von einem ersten Punkt A bis zu einem zweiten Punkt B. Der Versatz zwischen der Kontur 1 und dem Laserpfad 3 beruht auf dem Radius des Laserstrahls 2 in einer geometrischen Werkstück-Ebene 8, welche in den Figuren 9a, 9b, 10a und 10b dargestellt ist. Dabei wird berücksichtigt, dass das Laserstrahl 2 an dem Werkstück 4 nicht nur in einem Punkt in der Mitte des Laserstrahls Material abtragen kann sondern in einem kreisförmigen Bereich.

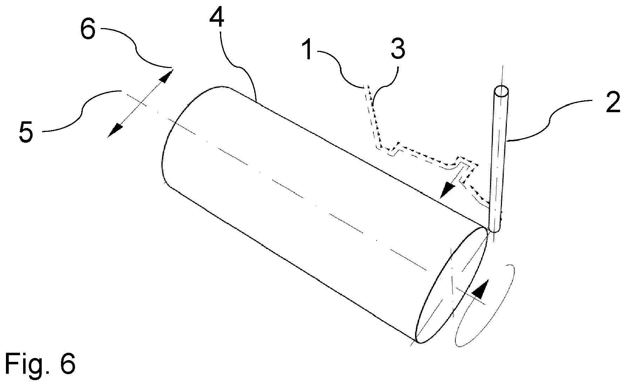

Durch eine Vorschubbewegung, bei der die Werkstück-Fixiereinrichtung und/ oder der Laserstrahl vorgeschoben werden, tritt die Oberfläche des in der Werkstück-Fixiereinrichtung angeordneten Werkstücks 4 mit dem Laserstrahl 2 in Kontakt, wobei mit dem Laserstrahl 2 Material an der Oberfläche des Werkstücks 4 abgetragen und die Kontur 1 Schritt für Schritt erzeugt wird. Diese Vorschubbewegung wird als dritte Bewegung bezeichnet. In den Figuren 1 bis 6 ist diese Vorschubbewegung eine lineare Bewegung des Werkstücks 4 senkrecht zur Werkstück-Rotationsachse 5 mit der Bewegungsrichtung 6. In Figur 6 ist zusätzlich dargestellt, dass der Laserpfad 3 in Richtung der Werkstück-Rotationsachse 5 verschoben wird. Hierbei handelt es sich um eine Parallelverschiebung des Laserpfads 3 in die durch einen Pfeil gekennzeichnete Richtung.

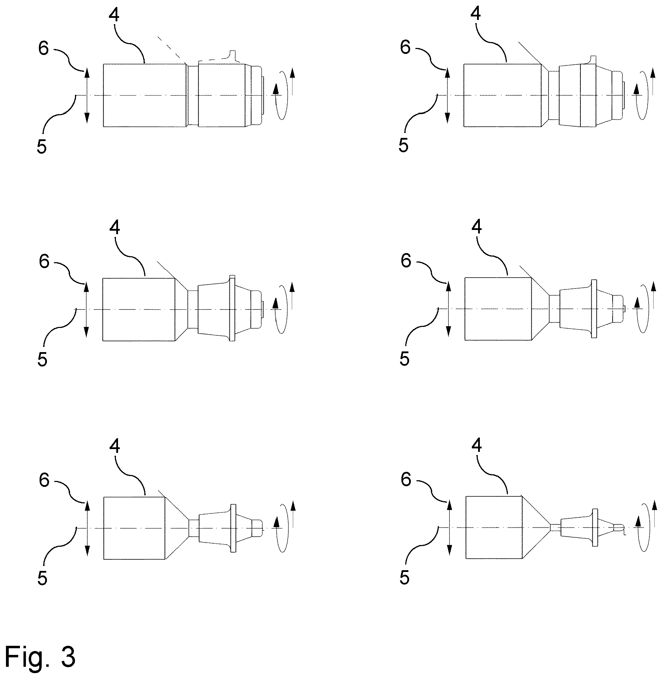

Die erste Bewegung, die zweite Bewegung und die dritte Bewegung werden zeitgleich ausgeführt. Sie sind einander überlagert. Dabei wird mit dem Laserstrahl 2 Material an der Oberfläche des Werkstücks 4 abgetragen, wobei Schritt für Schritt die vorgegebene Form des Werkstücks 4 erzeugt wird. Dies ist in Figur 3 dargestellt. Bei dem ersten Ausführungsbeispiel tritt der Laserstrahl 2 zuerst an dem Berührungspunkt 7 mit dem Werkstück 4 in Kontakt. Dieser Berührungspunkt 7 ist in Figur 2 dargestellt. Er fällt mit dem ersten Punkt A des Laserpfads 3 zusammen.

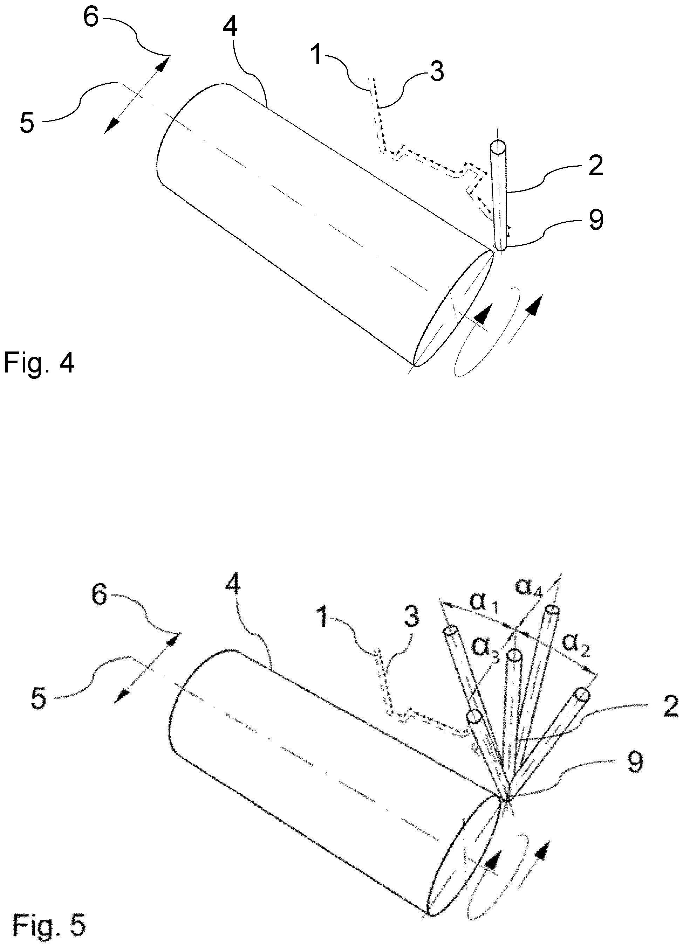

Der Laserstrahl 2 kann mit seiner Strahlachse senkrecht zu einer Werkstück-Ebene 8 ausgerichtet sein. Die Werkstück-Ebene 8 ist eine geometrische Ebene, welche sich durch das Werkstück erstreckt. Die geometrische Werkstück-Rotationsachse 5 verläuft in der Werkstück-Ebene. Die Werkstück-Ebene 8 ist in den Figuren 9a, 9b, 10a und 10b dargestellt. Grundsätzlich gibt es beliebig viele Werkstück-Ebenen, die sich durch das Werkstück 4 erstrecken und in denen die Werkstück-Rotationsachse 5 verläuft. Alle Ebenen, die diese Bedingungen erfüllen, schneiden sich in der Werkstück-Rotationsachse 5. Die in den Figuren 9a, 9b, 10a und 10b dargestellte Werkstück-Ebene 8 weist die Besonderheit auf, dass der Laserstrahl 2 senkrecht zu dieser Werkstück-Ebene 8 ist. Die senkrechte Ausrichtung des Laserstrahls 2 ist in den Figuren 4, 6, 9a, 9b, 10a und 10b dargestellt. Wenn Laserstrahl 2 senkrecht zu der Werkstück-Ebene 8 ausgerichtet ist, verläuft der Laserstrahl 2 beim Materialabtrag tangential zur Oberfläche des Werkstücks 4. Alternativ dazu kann der Laserstrahl 2 gegenüber dieser senkrechten Ausrichtung um einen Winkel α verkippt sein. Dies ist in Figur 5 dargestellt. Die Darstellung zeigt, dass die Strahlachse des Laserstrahls 2 in verschiedene Richtungen gegenüber einer Tangente an die Werkstückoberfläche in dem zu bearbeitenden Punkt ausgerichtet sein kann. Der Laserfokus 9 befindet sich vorteilhafterweise an oder nahe der Oberfläche des Werkstücks 4. Figur 5 zeigt exemplarisch vier verschiedene Richtungen, in die er Laserstrahl 2 mit seiner Strahlachse geneigt sein kann. Bei den Winkeln α₁ und α₂ verlaufen die Strahlachse des Laserstrahls 2 und die Tangente an den zu bearbeitenden Punkt an der Oberfläche des Werkstücks 4 in einer Ebene, die parallel zur Werkstück-Rotationsachse 5 ist. Bei den Winkeln α₃ und α₄ verlaufen die Strahlachse des Laserstrahls 2 und die Tangente an den zu bearbeitenden Punkt an der Oberfläche des Werkstücks 4 in einer Ebene, die senkrecht zur Werkstück-Rotationsachse 5 ist. Die Neigung des Laserstrahls um einen Winkel α kann jedoch auch in jede beliebige andere Richtung erfolgen. Die Winkel α, α₁, α₂, α₃, α₄ zwischen der Strahlachse des Laserstrahls 2 und der Tangente an die zu erzeugende Form des Werkstücks betragen zwischen 1° und 10° ein.

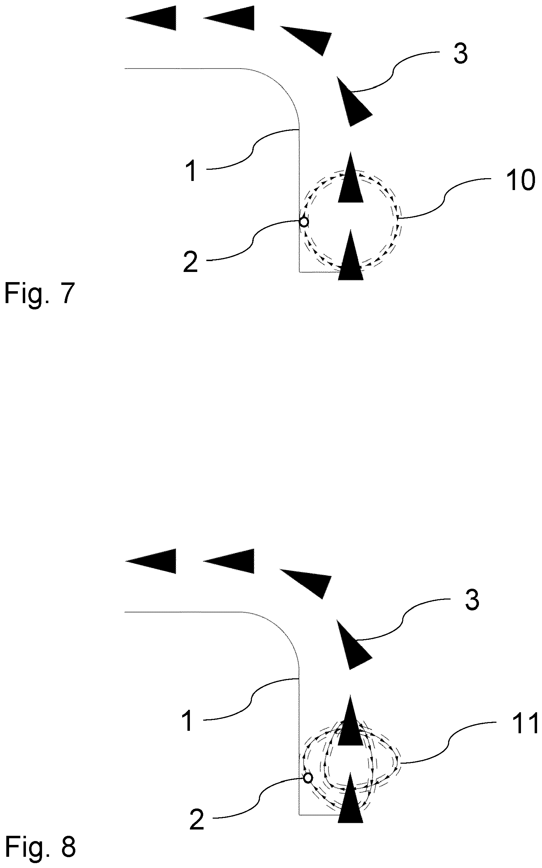

In den Figuren 7 und 8 ist eine zusätzliche Bewegung des Laserstrahls 2 dargestellt. Diese wird als vierte Bewegung bezeichnet. Der Laserstrahl 2 wird bei seiner Führung entlang des Laserpfads 3 zusätzlich entlang geschlossener kreisförmiger Kurven 10 oder unregelmäßig geformter Kurven 11 bewegt.

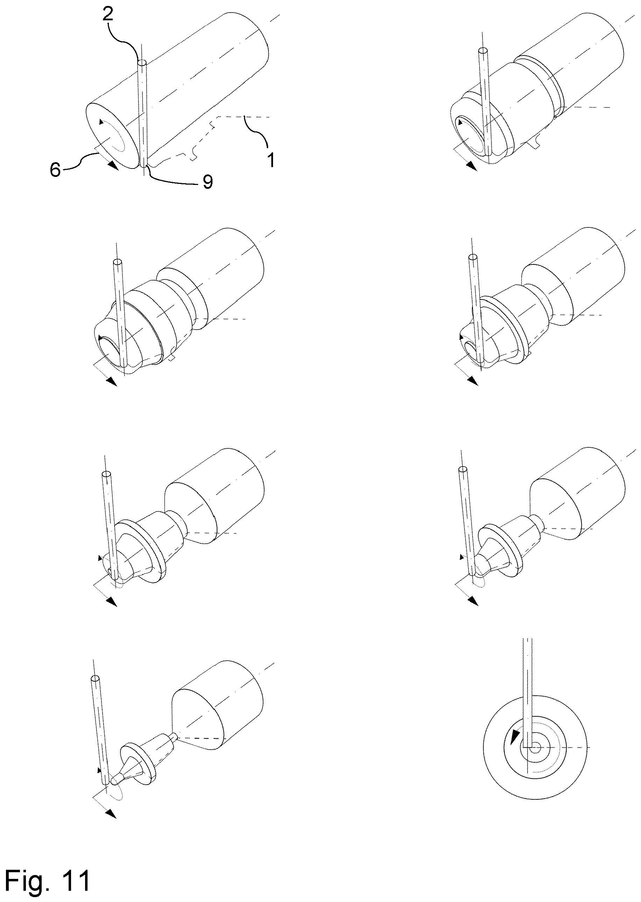

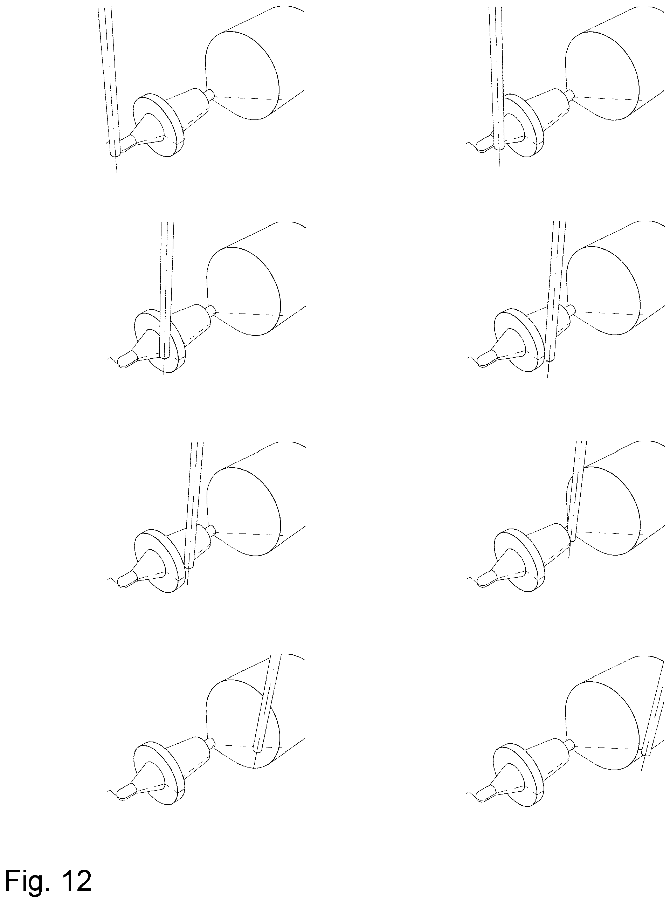

In den Figuren 9a, 9b, 10a, 10b, 11 und 12 sind das Werkstück 4 und der Laserstrahl 2 in verschiedenen Ansichten zu verschiedenen Zeitpunkten der Laserbearbeitung dargestellt. Die Darstellung zeigt, dass sich der Fokus 9 des Laserstrahls 2 unmittelbar an der Oberfläche des Werkstücks 4 befindet. Die Figur 11 zeigt darüber hinaus das Aussehen des Werkstücks 4 in verschiedenen Abschnitten der Laserbearbeitung. Figur 12 zeigt, wie der Laserstrahl 2 relativ zu dem Werkstück 4 während der zweiten Bewegung geführt wird und sich dabei entlang des vorgegebenen Laserpfads 3 bewegt. Die erste Darstellung in Figur 12 zeigt den Laserstrahl 2 im ersten Punkt A. Die letzte Darstellung in Figur 12 zeigt den Laserstrahl 2 im zweiten Punkt B. Die übrigen Darstellungen zeigen den Laserstrahl 2 an Positionen auf dem Laserpfad 3 zwischen den Punkten A und B.

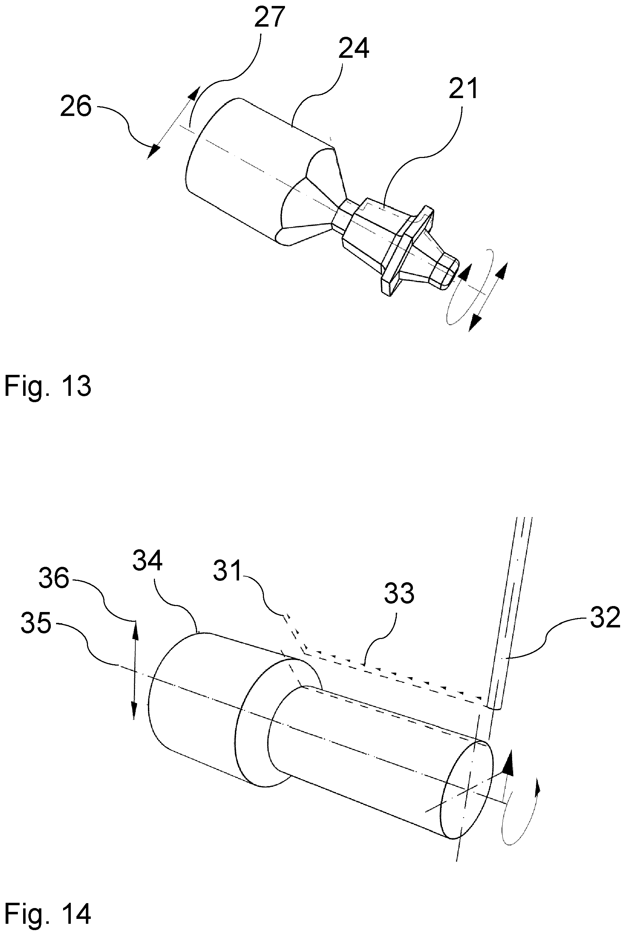

In Figur 13 ist ein zweites Ausführungsbeispiel einer Laserbearbeitung dargestellt. Es unterscheidet sich von dem ersten Ausführungsbeispiel der Figuren 1 bis 12 dadurch, dass das Werkstück 24 eine zu erzeugende äußere Form 21 aufweist, die ebene Flächen umfasst. Das Werkstück 24 weist nach Abschluss der Laserbearbeitung in dem bearbeiteten Abschnitt einen eckigen Querschnitt auf. Die zu erzeugende Form ist daher nicht rotationssymmetrisch. Diese äußere Form wird durch eine Überlagerung der ersten Bewegung, nämlich eine Rotation des Werkstücks 24 um die geometrische Werkstück-Rotationsachse 25, der zweiten Bewegung, welche einer Führung des Laserstrahls entlang eines durch die zu erzeugende äußere Form 21 vorgegebenen Laserpfads entspricht, und durch die dritte Bewegung in Form einer Vorschubbewegung in Richtung 26 erzeugt. Dabei weist der Laserstrahl mit seiner Strahlachse eine Ausrichtung gemäß der Darstellung in den Figuren 4 oder 5 auf.

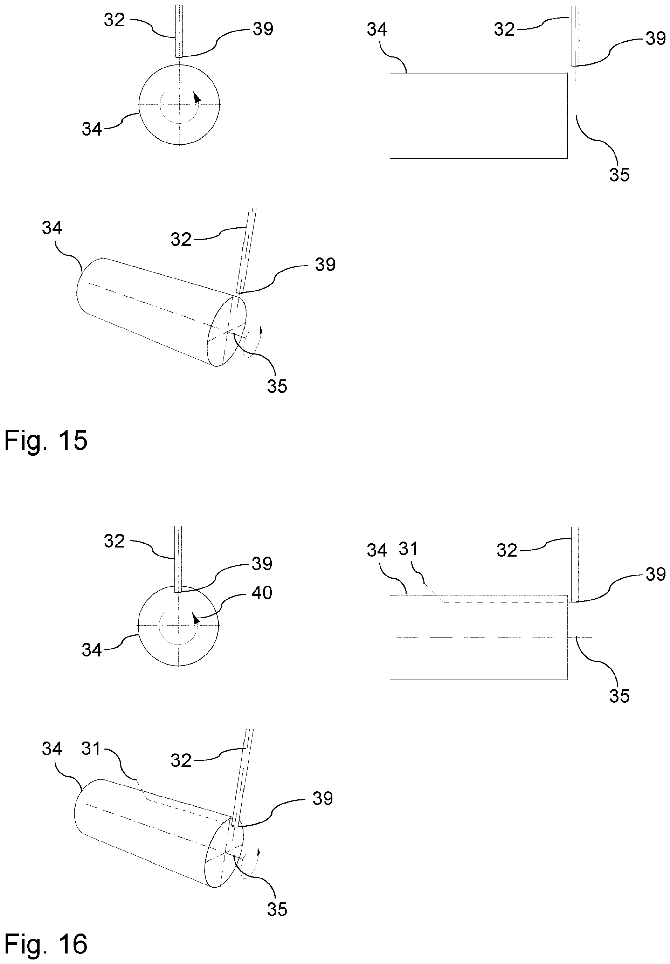

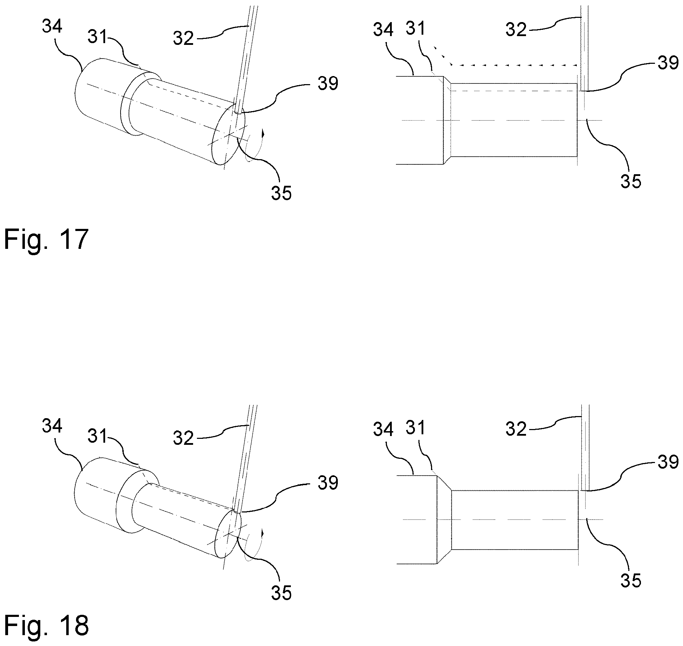

In den Figuren 14 bis 18 ist ein drittes Ausführungsbeispiel einer Laserbearbeitung dargestellt. Es unterscheidet sich von dem ersten Ausführungsbeispiel gemäß Figuren 1 bis 12 dadurch, dass das Laserstrahl 32 beim Materialabtrag mit seiner Strahlachse radial zu der geometrischen Werkstück-Rotationsachse 35 des Werkstücks 34 ausgerichtet ist. Der Laserstrahl 32 wird entlang des Laserpfads 33 geführt, der durch eine zu erzeugende Kontur 31 des Werkstücks 34 vorgegeben ist. Die Vorschubbewegung gemäß dritter Bewegung erfolgt in Richtung 36. Figur 15 zeigt das Werkstück 34 und den Laserstrahl 32 vor Beginn der Laserbearbeitung. Das Werkstück weist in diesem Stadium die Form eines Kreiszylinders auf. In Figur 16 startet die Laserbearbeitung. Durch die Vorschubbewegung der dritten Bewegung wird das Werkstück 34 derart auf den Laserstrahl 32 zubewegt, dass sich der Fokus 39 im Bereich der zu erzeugenden Kontur 31 befindet. Durch den Pfeil 40 ist die Rotation des Werkstücks 34 um die Werkstück-Rotationsachse 35 gemäß der ersten Bewegung dargestellt. Figur 17 zeigt das Werkstück 34, nachdem bereits ein Teil des Materials an der Außenseite abgetragen wurde. Figur 18 zeigt das fertige Werkstück am Ende der Laserbearbeitung.

In Figur 19 ist die Laserbearbeitungsvorrichtung 50 zur Durchführung des Verfahrens dargestellt. Die Laserbearbeitungsvorrichtung 50 umfasst eine Werkstück-Fixiereinrichtung 51, welche ein Werkstück 54 aufnimmt und fixiert, eine Bewegungseinrichtung 53, welche das in der Fixiereinrichtung angeordnete Werkstück 54 relativ zu einer Vorrichtungsbasis 55 bewegt, einen Laser 56, der einen Laserstrahl 52 erzeugt und eine Laserscanning-Einrichtung 57, welche den Laserstrahl 52 führt. Die Bewegungseinrichtung 53 weist im vorliegenden Fall drei lineare Achsen X, Y, Z und zwei Rotationsachsen B und C auf. Die Rotationsachse C sorgt dabei für eine Rotation des in der Werkstück-Fixiereinrichtung 51 angeordneten Werkstücks 54 um eine geometrische Werkstück-Rotationsachse, welche sich durch das Werkstück hindurch erstreckt. Die Laserscanning-Einrichtung 57 bewegt und führt den Laserstrahl 52 in drei verschiedene Richtungen im Raum. Dabei wird der Laserstrahl 52 entlang eines in Figur 19 nicht dargestellten Laserpfads relativ zum Werkstück 54 bewegt. Hierzu umfasst die Laserscanning-Einrichtung 57 mehrere Spiegel, welche den Laserstrahl gezielt umlenken können. Darüber hinaus ist die Laserscanning-Einrichtung mit mindestens einer Linse ausgestattet, welche den Laserstrahl auf die Oberfläche des Werkstücks 54 fokussiert. Die Spiegel und die Linse sind in der Zeichnung nicht dargestellt.

Sämtliche Merkmale können sowohl einzeln als auch in beliebiger Kombination miteinander erfindungswesentlich sein.

### Bezugszahlen

- 1: zu erzeugende Kontur des Werkstücks
- 2: Laserstrahl
- 3: Laserpfad
- 4: Werkstück
- 5: Werkstück-Rotationsachse
- 6: Bewegungsrichtung des Werkstücks bei der der dritten Bewegung
- 7: Berührungspunkt von Laserstrahl und Werkstück zu Beginn der Laserbearbeitung
- 8: Werkstück-Ebene
- 9: Laserfokus
- 10: Geschlossene Kurve bei der Bewegung des Laserstrahls gemäß vierter Bewegung
- 11: Offene Kurve bei der Bewegung des Laserstrahls gemäß vierter Bewegung
- 21: zu erzeugende Kontur des Werkstücks
- 24: Werkstück
- 25: Werkstück-Rotationsachse
- 26: Richtung der Vorschubbewegung
- 31: zu erzeugende Kontur des Werkstücks
- 32: Laserstrahl
- 33: Laserpfad
- 34: Werkstück
- 35: Werkstück-Rotationsachse
- 36: Richtung der Vorschubbewegung
- 39: Fokus des Laserstrahls
- 40: Rotation gemäß der ersten Bewegung
- 50: Laserbearbeitungsvorrichtung
- 51: Werkstück-Fixiereinrichtung
- 52: Laserstrahl
- 53: Werkstück-Bewegungseinrichtung

- 54: Werkstück
- 55: Vorrichtungsbasis
- 56: Laser
- 57: Laserscanning-Einrichtung

## Patentansprüche

1. Verfahren
zur laserbasierten Bearbeitung eines Werkstücks (4, 24, 34, 54), wobei an dem Werkstück (4, 24, 34, 54) durch Materialabtrag mittels eines Laserstrahls (2, 32, 52) eine vorgegebene äußere Form mit einer Kontur (1) erzeugt wird unter Verwendung einer Laserbearbeitungsvorrichtung (50), welche
eine das Werkstück (4, 24, 34, 54) aufnehmende und fixierende Werkstück-Fixiereinrichtung (51),
eine Bewegungseinrichtung( 53), welche die Werkstück-Fixiereinrichtung relativ zu einer Vorrichtungsbasis (55) bewegt, und
einen Laser (56) umfasst, welcher einen entlang einer Strahlachse gerichteten Laserstrahl (2, 32, 52) erzeugt und welcher eine den Laserstrahl (2, 32, 52) gezielt ablenkende Laserscanning-Einrichtung (57) aufweist,
**gekennzeichnet durch** folgende Verfahrensschritte:
- Anordnen des Werkstücks (4, 24, 34, 54) in der Werkstück-Fixiereinrichtung (51),
- Ausführen der folgenden drei Bewegungen:
eine erste Bewegung, welche eine Werkstück-Rotationsbewegung ist, bei der die Werkstück-Fixiereinrichtung (51) um eine geometrische Werkstück-Rotationsachse (5, 25, 35) rotiert und dabei das in der Werkstück-Fixiereinrichtung (51) angeordnete Werkstück (4, 24, 34, 54) um die sich durch das Werkstück (4, 24, 34, 54) erstreckende Werkstück-Rotationsachse (5, 25, 35) endlos gedreht wird und eine fortlaufende Abfolge vollständiger Umdrehungen vollführt,
eine zweite Bewegung, welche eine Führung des Laserstrahls (2, 32, 52) ist, wobei der Laserstrahl (2, 32, 52) mittels der Laserscanning-Einrichtung (57) entlang eines vorgegebenen Laserpfads (3, 33) bewegt wird, welcher sich von einem ersten Punkt A bis zum einem zweiten Punkt B erstreckt und welcher durch den Verlauf der zu erzeugenden Kontur (1, 21, 31) des Werkstücks (4, 24, 34, 54) vorgegeben ist,
eine dritte Bewegung, welche eine Vorschubbewegung ist, bei der die Werkstück-Fixiereinrichtung (51) und/ oder der Laserstrahl (2, 32, 52) vorgeschoben werden, derart, dass die Oberfläche des in der Werkstück-Fixiereinrichtung (51) angeordneten Werkstücks (4, 24, 34, 54) mit dem Laserstrahl (2, 32, 52) in Kontakt tritt, wobei mit dem Laserstrahl (2, 32, 52) Material an der Oberfläche des Werkstücks (4, 24, 34, 54) abgetragen und die Kontur (1, 21, 31) erzeugt wird
wobei die erste Bewegung, die zweite Bewegung und die dritte Bewegung gleichzeitig und parallel zueinander ausgeführt werden, bis die vorgegebene Form mit der Kontur (1, 21, 31) an dem Werkstück (4, 24, 34, 54) erzeugt ist.

2. Verfahren nach Anspruch 1, **dadurch gekennzeichnet, dass** der Laserstrahl (2, 32, 52) bei der zweiten Bewegung mehrfach an dem Laserpfad (3, 33) von A nach B entlanggeführt wird.

3. Verfahren nach Anspruch 2, **dadurch gekennzeichnet, dass** der Laserstrahl (2, 32, 52) entlang des Laserpfads (3, 33) von A nach B und anschließend von B nach A geführt wird.

4. Verfahren nach einem der vorhergehenden Ansprüche, **dadurch gekennzeichnet, dass** der Laserstrahl (2, 32, 52) bei der zweiten Bewegung entlang des Laserpfads (3, 33) von A nach B senkrecht zur Strahlachse bewegt wird.

5. Verfahren nach einem der vorhergehenden Ansprüche, **dadurch gekennzeichnet, dass** die Schnittmenge zwischen einer geometrischen Werkstückebene (8), in der die Werkstück-Rotationsachse (5, 25, 35) verläuft, und der zu erzeugenden äußeren Form des Werkstücks (4, 24, 34, 54) den Laserpfad (3, 33) von A nach B umfasst.

6. Verfahren nach einem der vorhergehenden Ansprüche, **dadurch gekennzeichnet, dass** der erste Punkt A und der zweite Punkt B in axialer Richtung bezogen auf die Werkstück-Rotationsachse (5, 25, 35) die Grenzen der mit dem Verfahren zu erzeugenden Form des Werkstücks (4, 24, 34, 54) darstellen.

7. Verfahren nach einem der vorhergehenden Ansprüche, **dadurch gekennzeichnet, dass** der Laserpfad (3, 33) dem Verlauf der zu erzeugenden Kontur (1, 21, 31) entspricht.

8. Verfahren nach einem der Ansprüche 1 bis 6, **dadurch gekennzeichnet, dass** der Laserstrahl (2, 32, 52) eine zusätzliche vierte Bewegung ausführt, bei der der Laserstrahl (2, 32, 52) in offenen oder geschlossenen Kurven um ein Zentrum bewegt wird, und dass die vierte Bewegung der zweiten Bewegung überlagert ist.

9. Verfahren nach Anspruch 8, **dadurch gekennzeichnet, dass** das Verhältnis zwischen dem Durchmesser der offenen oder geschlossenen Kurve und dem Durchmesser des Laserstrahls (2, 32, 52) beim Auftreffen auf das Werkstück (4, 24, 34, 54) zwischen 1,2 und 150 beträgt.

10. Verfahren nach einem der vorhergehenden Ansprüche, **dadurch gekennzeichnet, dass** bei der dritten Bewegung die Werkstück-Fixiereinrichtung (51) in einer Richtung senkrecht zur Strahlachse des Laserstrahls (2, 32, 52) bewegt wird.

11. Verfahren nach einem der vorhergehenden Ansprüche, **dadurch gekennzeichnet, dass** bei der dritten Bewegung der Laserstrahl (2, 32, 52) in Richtung des Werkstücks (4, 24, 34, 54) bewegt wird.

12. Verfahren nach einem der vorhergehenden Ansprüche, **dadurch gekennzeichnet, dass** die dritte Bewegung eine lineare Bewegung in radialer Richtung bezogen auf die Werkstück-Rotationsachse (5, 25, 35) umfasst.

13. Verfahren nach einem der vorhergehenden Ansprüche, **dadurch gekennzeichnet, dass** die dritte Bewegung eine lineare Bewegung in axialer Richtung oder parallel zur axialen Richtung bezogen auf die Werkstück-Rotationsachse (5, 25, 35) umfasst.

14. Verfahren nach einem der vorhergehenden Ansprüche, **dadurch gekennzeichnet, dass** der Laserstrahl (32) mit seiner Strahlachse beim Abtragen von Material an der Oberfläche des Werkstücks (34) radial zur Werkstück-Rotationsachse (35) ausgerichtet ist.

15. Verfahren nach einem der vorhergehenden Ansprüche, **dadurch gekennzeichnet, dass** der Laserstrahl (2, 52) mit seiner Strahlachse beim Abtragen von Material an der Oberfläche des Werkstücks (4, 24, 54) tangential zur Oberfläche des Werkstücks (4, 24, 54) ausgerichtet ist.

16. Verfahren nach einem der vorhergehenden Ansprüche, **dadurch gekennzeichnet, dass** der Laserstrahl (2, 52) mit seiner Strahlachse gegenüber einer Tangente an die Oberfläche des Werkstücks (4, 24, 54) um einen Winkel α in axialer Richtung geneigt ist, wobei der Winkel α zwischen 1 ° und 10° beträgt.

17. Verfahren nach einem der vorhergehenden Ansprüche, **dadurch gekennzeichnet, dass** die dritte Bewegung in Abhängigkeit von der zweiten Bewegung gesteuert ist.

18. Verfahren nach einem der vorhergehenden Ansprüche, **dadurch gekennzeichnet, dass** die dritte Bewegung in Abhängigkeit von der ersten Bewegung gesteuert ist.

19. Laserbearbeitungsvorrichtung zur Durchführung des Verfahrens nach einem der vorhergehenden Ansprüche, **dadurch gekennzeichnet, dass** sie eine das Werkstück (4, 24, 34, 54) aufnehmende und fixierende Werkstück-Fixiereinrichtung (51), eine Bewegungseinrichtung (53), welche die Werkstück-Fixiereinrichtung (51) relativ zu einer Vorrichtungsbasis (55) bewegt, und einen Laser (56) umfasst, welcher einen entlang einer Strahlachse gerichteten Laserstrahl (2, 32, 52) erzeugt und welcher eine den Laserstrahl (2, 32, 52) gezielt ablenkende Laserscanning-Einrichtung (57) aufweist,
wobei die Bewegungseinrichtung (53) ausgebildet ist, eine erste Bewegung, welche eine Werkstück-Rotationsbewegung ist, auszuführen, bei der die Werkstück-Fixiereinrichtung (51) rotiert und dabei das in der Werkstück-Fixiereinrichtung (51) angeordnete Werkstück (4, 24, 34, 54) um eine sich durch das Werkstück (4, 24, 34, 54) erstreckende Werkstück-Rotationsachse (5, 25, 35) endlos gedreht wird und eine fortlaufende Abfolge vollständiger Umdrehungen vollführt,
wobei die Laserscanning-Einrichtung (57) ausgebildet ist, in einer zweiten Bewegung den Laserstrahl (2, 32, 52) zu führen und dabei den Laserstrahl (2, 32, 52) entlang eines vorgegebenen Laserpfads (3, 33) zu bewegen, wobei sich der Laserpfad (3, 33) von einem ersten Punkt A bis zum einem zweiten Punkt B erstreckt und der Laserpfad (3, 33) durch den Verlauf der zu erzeugenden Kontur (1, 21, 31) vorgegeben ist,
wobei die Bewegungseinrichtung (53) und/ oder der Laser (56) ausgebildet sind, eine Vorschubbewegung als dritte Bewegung auszuführen, derart, dass die Oberfläche des in der Werkstück-Fixiereinrichtung (51) angeordneten Werkstücks (4, 24, 34, 54) mit dem Laserstrahl (2, 32, 52) in Kontakt tritt, wobei mit dem Laserstrahl (2, 32, 52) Material an der Oberfläche des Werkstücks (4, 24, 34, 54) abgetragen und die vorgegebene äußere Form mit der Kontur (1, 21, 31) erzeugt wird, wobei die erste Bewegung, die zweite Bewegung und die dritte Bewegung zeitgleich erfolgen.

20. Laserbearbeitungsvorrichtung nach Anspruch 19, **dadurch gekennzeichnet, dass** die Laserbearbeitungsvorrichtung (50) mit einer Steuerungseinrichtung ausgestattet ist, welche die erste Bewegung, die zweite Bewegung und die dritte Bewegung steuert.
